# EUROPEAN PATENT SPECIFICATION

(11) **EP 2 994 503 B1**
(45) Date of publication and mention of the grant of the patent: **03.07.2019**
(21) Application number: 14794867.3
(22) Date of filing: 07.05.2014
(51) Int. Cl.: C08J 9/236, C08J 9/32, C08J 9/35, C08L 25/06, C08L 61/10, B29C 44/04

(54) **FOAM COMPOSITES**
VERBUNDSCHAUMSTOFFE
COMPOSITES DE MOUSSE

(30) Priority: 07.05.2013 AU 2013901615
(43) Date of publication of application: 16.03.2016
(73) Proprietor: XFLAM PTY LTD, South Melbourne VIC 3205 (AU)
(72) Inventor: BRACEGIRDLE, Wren, South Melbourne, Victoria 3205 (AU); MONTI, Michael, South Melbourne, Victoria 3205 (AU); SMYTH, Gordon, South Melbourne, Victoria 3205 (AU); CLARKE, Stephen, South Melbourne, Victoria 3205 (AU); MCMILLAN, Stephen, South Melbourne, Victoria 3205 (AU); GLYNN, Julian, South Melbourne, Victoria 3205 (AU); ORPIN, Murray, Leominster Herefordshire HR6 0BS (GB)
(74) Representative: V.O.
(86) International application number: PCT/AU2014/050029
(87) International publication number: WO 2014/179842

(56) References cited:
- EP-A1- 0 559 254
- GB-B- 2 362 586
- US-A- 3 842 020
- US-A- 4 596 682
- US-A1- 2004 102 534
- US-A1- 2004 102 534
- US-A1- 2007 142 485

## Description

### FIELD

The present disclosure relates to polystyrene-phenolic foam composites and to particulate compositions suitable for preparing the composites. The foam composites possess advantageous properties particularly, although not exclusively, useful in insulation and fire resisting applications.

### BACKGROUND

Polystyrene foam slabs or forms are widely used for thermal and acoustic insulation in building construction. The conventional process for the production of a polystyrene foam slab or form is as follows:
1. Expandable polystyrene is supplied from the manufacturer in particulate form graded for particle size. This particulate polystyrene has a proportion of blowing agent such as pentane dissolved in it.
2. The particles are exposed to heat, usually by steam, in a fluidised bed. As the particles pass from the bottom of the fluidised bed to the top, they soften and as the pentane is lost from solid solution, the released gas causes the softened polystyrene particles to expand up to fifty times their original volume. The particles become approximately spherical with a very low density. The expanded polystyrene particles are collected at the top of the bed. The particles still contain a small amount of pentane after this primary expansion process.
3. The dry particles are introduced into moulds the walls of which are penetrated by many small apertures. The dry particles may then be compressed. Steam is introduced into the vessel containing the polystyrene particles. The polystyrene particles soften and the residual pentane is released. In this second stage the volume expansion of the charge is contained by the mould walls forcing the particles together and fusing them to form a single, lightweight mass of expanded polystyrene foam.
4. If the mould is in the form of a block, the blocks of expanded polystyrene are subsequently sliced into slabs. These slices may be used as the cores of insulating walls or panels.

A disadvantage of polystyrene foams is their high propensity to burn and/or melt in a fire leading to the loss of structural strength. In contrast, foams with a phenolic resin matrix, that is phenolic foams, as a class of materials, are known for their excellent fire resistance and thermal properties, but their commercial potential in many fields of application is impeded due to their poor structural properties characterised by high brittleness and friability.

US20040102534 discloses: a pre-mix for a syntactic phenolic foam composition; a syntactic phenolic foam composition; and a process for preparing the syntactic phenolic foam composition.

It would be desirable to identify new foam products and compositions that address one or more of the above limitations.

### SUMMARY

There is provided a polystyrene-phenolic foam composite comprising:
(a) expanded polystyrene derived from expandable polystyrene particles containing at least one blowing agent;
(b) cured phenolic resole resin;
(c) expanded thermoplastic microspheres derived from expandable thermoplastic microspheres containing a propellant encapsulated within a thermoplastic polymer shell;
   wherein the composite has a water absorption according to ASTM C272 of less than 5% by volume; and wherein the composite is obtainable by steam curing.

The polystyrene-phenolic foam composite may be formed using a particulate composition comprising:
(a) expandable polystyrene particles;
(b) reactive phenolic resole resin;
(c) expandable thermoplastic microspheres; and
(d) acidic catalyst.

The particulate composition possesses excellent handling qualities, being substantially flowable. The advantageous flowability enables ease of transfer and manipulation of the particles during manufacturing operations. Furthermore, although the resole resin is highly reactive it is present in the particulate composition in a latent state and may be suitably activated so as to induce curing.

The reactive phenolic resole resin may be present in the particulate composition in a partially cured state.

'Partially cured state' as used herein means that the phenolic resole resin may not have been subjected to temperatures above 80°C, or above 70°C. Also, the phenolic resole resin may not have been subjected to temperatures above 80°C, or not above 70°C, for more than 1 hour. Alternatively, the phenolic resole resin may not have been subjected to temperatures above 80°C, or not above 70°C, for more than 0.5 hour.

The particulate composition may be substantially dry. As used in this context the term 'substantially' means that the particulate composition contains less than 10% by weight water based on the total weight of the composition and water, or less than 7% by weight water, or less than 5% by weight water, or less than 3% by weight water, or less than 1% by weight water, or 0% water. The particulate composition may also be tack-free.

The reactive phenolic resole resin may be substantially insoluble in water.

The particulate composition as disclosed herein may have any one or any combination of the above disclosed features.

The particulate composition may further comprise a filler, and particularly a reinforcing filler. A range of fillers is available. One or more fillers may be used depending on the characteristics required of the end product. Suitable, non limiting fillers include particulate silica, talc, kaolin, clay and titanium dioxide, glass fiber, nanocomposites and nanoparticles. Inorganic compounds, particularly particulate inorganic compounds, may be utilised. The filler may be present in amounts of 0.5-60% by weight, or 1-20% by weight, or 2-15% by weight, based on the total weight of the particulate composition.

The properties of the particulate filler may be suitably modified by treatment with one or more agents, for example to modify the surface properties of the filler. Such treatment may, for example, reduce the solubility of soluble fillers in a liquid, particularly an aqueous liquid. The selection of the modifying agent(s) will depend on the desired characteristics of the filler. A preferred class of modifying agents includes silanes.

The filler may have a particle size between 0.1 mm and 5 mm, or between 0.5 mm and 2 mm. The particulate filler may be granular boric acid. Granular boric acids of particle size of about 1 mm are suitable. The granular boric acid may be treated with a silane to yield a silane coated granular boric acid. The silane serves to reduce the water solubility of the boric acid.

The particulate composition may be prepared by combining expandable polystyrene particles, phenolic resole resin, thermoplastic expandable microspheres, and, optionally, filler in the presence of an acidic catalyst.

At least one of the constituents of the particulate composition may be provided in the form of an aqueous solution, dispersion or suspension. During the process of forming the particulate composition, which may involve partial curing, at least some of the water may be removed from the composition, with the result that the particulate composition becomes substantially dry so that it is free flowing and easily transferable. As used in this context the term 'substantially' means that the particulate composition contains less than 10% by weight water based on the total weight of the composition and water, or less than 7% by weight water, or less than 5% by weight water, or less than 3% by weight water, or less than 1% by weight water, or 0% water.

### Expandable Polystyrene Particles

The expandable polystyrene particles may have an average particle size between 0.1 and 5 mm, or between 0.5 and 3 mm, or between 0.5 and 1.5 mm, or between 0.7 and 1.0 mm.

The density of the expandable polystyrene particles may be between 5 kg/m³ and 20 kg/m³, or between 7 and 18 kg/m³, or between 9 kg/m³ and 14 kg/m³.

The expandable polystyrene particles contain at least one blowing agent. The preferred polystyrene blowing agent comprises liquid physical blowing agents, which are volatile liquids and which produce a blowing gas through vaporisation of the blowing agent or through decomposition of the blowing agent when heated.

The amount of blowing agent present in the expandable polystyrene particles may be between 1 and 12% by weight, or between 2 and 10% or between 4 and 8%.

Numerous blowing agents suitable for use are well known in the art. The blowing agent may be a liquid having an atmospheric pressure boiling point between -50° and 100° C, or between 0° and 50° C.

Examples of blowing agents include organic compounds such as hydrocarbons, halogenated hydrocarbons, alcohols, ketones and ethers. Specific examples of hydrocarbon blowing agents include propane, butane, pentane, isopentane and hexane. Pentane is an exemplary blowing agent.

The expandable polystyrene particles may be derived from styrene polymers that are commonly used for preparing polystyrene particles that are to be blown to form polystyrene foam particles. As well as using styrene as the sole monomer, other addition polymerisable monomers may be used, and such copolymers are embraced by the term polystyrene in this specification. Styrene is always present as the major component of the polystyrene polymer.

The expandable polystyrene particles may be unexpanded or partially expanded polystyrene particles or mixtures thereof. The expandable polystyrene particles may be partially expanded.

The expandable polystyrene particles may be modified by the addition of one or more additives, such as flame retardants, smoke suppressants, antistatic agents, flowability improvers, foaming modifiers, and other additives commonly found or used in expandable polystyrene particles. For example, the expandable polystyrene particles may be coated or impregnated with carbon or graphite.

### Phenolic Resole Resin

Base-catalysed phenol-formaldehyde resins made with a formaldehyde to phenol ratio of greater than one (usually around 1.5) are termed resoles. The phenolic resole resin present in the particulate composition may be derived from a reactive phenolic resole resin having a viscosity of between 500-4,000 mPa·s (cP) at a temperature of 25°C, or between 1000-3000 mPa·s (cP) at a temperature of 25°C. The reactive phenolic resole present in the particulate composition may have a water content of 2-7% by weight based on the total weight of the reactive phenolic resole resin and water, or water content of 3-6% by weight based on the total weight of the reactive phenolic resole resin and water. The reactive phenolic resole resin may have a free phenol content of less than 25% by weight relative to the total weight of the reactive phenolic resole resin and water, or less than 20% by weight, or less than 18% by weight. The free phenol content may be between 10% and 20% by weight, or between 14% and 18% by weight. The reactive phenolic resole resin may have a free formaldehyde content of less than 3% by weight, or less than 1% by weight relative to the total weight of the reactive phenolic resole resin and water. The reactive phenolic resole resin may have a pH of 7 or less, or a pH of 6.6 or less. The reactive phenolic resole resin may have any one or any combination of the above disclosed features.

### Expandable Thermoplastic Microspheres

The expandable thermoplastic microspheres may have an average particle size from between 1 and 100 µm (microns), or from between 2 and 50 µm (microns), or from between 5 and 20 µm (microns). The expandable thermoplastic microspheres may be derived from unexpanded or partially expanded microspheres or a mixture thereof, and comprise a thermoplastic polymer shell made of a homopolymer or copolymer. Mixtures of different thermoplastic microspheres may be utilised.

The thermoplastic polymer shell of the thermoplastic microspheres may be derived from monomers selected from the group consisting of acrylonitrile, methacrylonitrile, α-chloroacrylonitrile, α-ethoxyacrylonitrile, fumaroacrylonitrile, crotoacrylonitrile, acrylic esters, methacrylic esters, vinyl chloride, vinylidene chloride, vinylidene dichloride, vinyl pyridine, vinyl esters, and derivatives or mixtures thereof.

The thermoplastic polymer shell may be derived from at least vinylidene chloride monomer.

The expandable microspheres contain a propellant encapsulated within the thermoplastic polymer shell. The microspheres may expand by heating above the boiling point of the propellant and above the softening point of the polymer shell.

The propellant may be a volatile liquid trapped within the polymer shell. Suitable propellants include various short chain alkanes and short chain isoalkanes such as, but not limited to, isopentane, isobutane, n-butane, hexane, heptane, isooctane, petroleum ether and pentane or mixtures thereof.

Suitable thermoplastic microspheres may begin to soften in the range 70-100°C, or 85-95°C, and maximum expansion may occur in the range of 100-150°C, or 115-125°C.

The expandable thermoplastic microspheres may be provided in the form of an aqueous dispersion and then added to form the particulate composition as this aqueous dispersion. The amount of expandable microspheres in the aqueous dispersion may be between 2 and 60% by weight based on the total weight of the aqueous dispersion, or between 5 and 40% by weight based on the total weight of the dispersion, or between 10 and 25% by weight based on the total weight of the dispersion.

The expandable microspheres may be combined with one or more fillers prior to mixing with the other components to form the particulate composition. Preferably an aqueous dispersion of expandable microspheres is treated with the particulate filler. If required, the filler may be pre-treated with a suitable modifying agent.

### Acidic Catalyst

The acidic catalyst may be a strong inorganic or organic acid or their esters. Strong organic acids include sulphonic acids and their esters including benzene sulphonic acid, toluene sulphonic acid, phenol sulphonic acid, xylene sulphonic acid, β-naphthalene sulphonic acid, α-naphthalene sulphonic acid, esters thereof and mixtures thereof. The acids may further include weak inorganic acids and their esters, either alone or in admixture. The acids that may be employed still further include mixtures of two or more of strong organic acids; mixtures of two or more of esters of strong organic acids; mixtures of two or more of weak inorganic acids; and mixtures of two or more of esters of weak inorganic acids, as well as mixtures of different acids or their esters. Suitable catalysts are phosphate esters and blends of phosphoric acid with strong organic acids such as para-toluene sulphonic acid or any other sulphonic acid or its ester. Mixtures of any two or more of the acids and/or esters can also be used.

### Other Components

Other components may be included in the composition to improve particular physical properties or to reduce costs. These may be added to one or more of the expandable polystyrene, the phenolic resole resin or the thermoplastic microspheres or at any stage of mixing these components to form the particulate composition. For example, fire retardants containing, for example, chlorine, bromine, boron, phosphorous or ammonia, especially ammonium phosphate may be added to improve fire resistance. Expandable graphite can also be usefully employed. The graphite expands when exposed to high temperatures as encountered in a fire.

One or more surfactants may also be present in the composition. Suitable surfactants include silicone polyethers, particularly silicone glycol copolymers. Water repellents, such as silicon containing aqueous emulsions may also be added to control or reduce water absorption.

One or more of the constituents of the particulate composition may be treated with other additives and/or modifiers. For example they may be treated with a thermal conductivity modifier such as carbon, particularly an aqueous dispersed carbon. The thermoplastic microspheres may be treated with a thermal conductivity modifier such as carbon, particularly an aqueous dispersed carbon prior to combining with the other components of the particulate composition.

As described above, the particulate composition that can be used for forming the polystyrene-phenolic foam composite as herein disclosed comprises a phenolic resole resin that may be cured.

The phenolic resole resin as disclosed herein used for forming the polystyrene-phenolic foam composite may be cured, in the presence of an acidic catalyst, expandable polystyrene particles and expandable thermoplastic microspheres, and, optionally, a filler. The formed composite may be characterised by the expanded polystyrene and/or the expanded thermoplastic microspheres being, at least in part, solubilised and/or mixed in the cured phenolic resin. The expanded polystyrene and/or the expanded thermoplastic microspheres may also be, at least in part, chemically reacted with the cured phenolic resin to form covalent bonds.

The polystyrene-phenolic foam composite provided comprises:
(a) expanded polystyrene;
(b) cured phenolic resole resin; and
(c) expanded thermoplastic microspheres,
   and has a water absorption according to ASTM C272 of less than 5% by volume.

The polystyrene-phenolic foam composite comprising:
(a) expanded polystyrene;
(b) cured phenolic resole resin; and
(c) expanded thermoplastic microspheres may be further characterized by that the expanded polystyrene and/or the expanded thermoplastic microspheres are, at least in part, mixed in the cured phenolic resin.

The polystyrene-phenolic foam composite comprising:
(a) expanded polystyrene;
(b) cured phenolic resole resin; and
(c) expanded thermoplastic microspheres may be further characterized by that the composite has a specific mass loss rate @ 50kW, measured according to ISO 17554, of less than 8 g/m².s, or less than 6 g/m².s, or less than 4 g/m².s, or less than 2 g/m².s.

The polystyrene-phenolic foam composite comprising:
(a) expanded polystyrene;
(b) cured phenolic resole resin; and
(c) expanded thermoplastic microspheres may be further characterized by that the composite exhibits insulation failure times, according to AS1530.4, for a 100 mm thick panel, of greater than 30 minutes, or greater than 20 minutes, or greater than 10 minutes.

The foam composites as disclosed herein may comprise from 20 to 80 wt.% of (a), from 20 to 60 wt.% of (b) and from 0.5 to 5 wt.% of (c) based on the total weight of the composites, or the composites comprises from 35 to 65 wt.% of (a), from 25 to 50 wt.% of (b) and from 1.5 to 5 wt.% of (c) based on the total weight of the composites.

The foam composites as disclosed herein advantageously possess low interstitial volume. While not wishing to be bound by theory it is believed that solubilisation and/or mixing of the polystyrene and/or thermoplastic microsphere phases in the phenolic phase accounts, at least in part, for the low interstitial volume.

The foam composites as disclosed herein advantageously possess low water absorption in accordance with ASTM C272 (Standard Test Method for Water Absorption of Core Materials for Sandwich Constructions). The water absorption of the foam composites is desirably less than 5% by volume.

The foam composites as disclosed herein possess excellent physical and chemical properties. They are highly fire resistant and the cured phenolic resole resin is not rigid and brittle but is, conversely, tough and resilient in nature.

The polystyrene-phenolic foam composites may further comprise one or more fillers or treated fillers, as hereinbefore described.

### Expanded Polystyrene

The expanded polystyrene may be derived from expandable polystyrene particles having an average particle size from between 0.1 and 5 mm, or between 0.5 and 3 mm, or between 0.5 and 1.5 mm.

The expandable polystyrene particles contain at least one blowing agent. The preferred polystyrene blowing agent comprises liquid physical blowing agents, which are volatile liquids which produce a blowing gas through vaporisation of the blowing agent or through decomposition of the blowing agent when heated.

Numerous blowing agents suitable for use are well known in the art. Ideally, the blowing agent should be a liquid having an atmospheric pressure boiling point between -50° and 100° C, or between 0° and 50° C.

Examples of blowing agents include organic compounds such as hydrocarbons, halogenated hydrocarbons, alcohols, ketones and ethers. Specific examples of hydrocarbon blowing agents include propane, butane, pentane, isopentane and hexane. Pentane is a preferred blowing agent.

The expandable polystyrene particles as used herein are derived from styrene polymers that are commonly used for preparing polystyrene particles that are to be blown to form polystyrene foam particles. As well as using styrene as the sole monomer other addition polymerisable monomers may be used and such copolymers are embraced by the term polystyrene in this specification. Styrene is always present as the major component of the polystyrene polymer.

The expandable polystyrene particles as used herein may be unexpanded or partially expanded polystyrene particles or mixtures thereof. This enables relatively high levels of expanded polystyrene to be incorporated into the final foam composite.

The expandable polystyrene particles as used herein may be modified by the addition of one or more additives, such as flame retardants, smoke suppressants, antistatic agents, flowability improvers, foaming modifiers, and other additives commonly found or used in expandable polystyrene particles.

### Cured Phenolic Resole Resin

The cured phenolic resole resin may be formed from the phenolic resole resin, as disclosed herein, through the application of heat. Specifically, the cured phenolic resole is obtainable by steam curing wherein steam is the source of heat and the curing treatment.

### Expanded Thermoplastic Microspheres

The expanded thermoplastic microspheres are derived from expandable thermoplastic microspheres having an average particle size from between 1 and 100 µm (microns), or from between 2 and 50 µm (microns), or from between 5 and 20 µm (microns). The expanded thermoplastic microspheres may be derived from unexpanded or partially expanded microspheres or a mixture thereof, and comprise a thermoplastic polymer shell made of a homopolymer or copolymer.

The thermoplastic polymer shell of the thermoplastic microspheres is derived from monomers selected from the group consisting of acrylonitrile, methacrylonitrile, α-chloroacrylonitrile, α-ethoxyacrylonitrile, fumaroacrylonitrile, crotoacrylonitrile, acrylic esters, methacrylic esters, vinyl chloride, vinylidene chloride, vinylidene dichloride, vinyl pyridine, vinyl esters, and derivatives or mixtures thereof.

The thermoplastic polymer shell may be derived from vinylidene chloride monomer.

The expandable microspheres contain a propellant encapsulated within the thermoplastic polymer shell. The microspheres may expand by heating above the boiling point of the propellant and above the softening point of the polymer shell.

The propellant may be a volatile liquid trapped within the polymer shell. Suitable propellants include various short chain alkanes and short chain isoalkanes such as, but not limited to, isopentane, isobutane, n-butane, hexane, heptane, isooctane, petroleum ether and pentane or mixtures thereof.

Suitable thermoplastic microspheres may begin to soften in the temperature range of 70-100°C, or 85-95°C and maximum expansion may occur in the temperature range of 100-150°C, or 115-125°C.

### Other Components

Other components may be included in the foam composites, such as those described in relation to prior art polystyrene foams and as disclosed hereinbefore in respect of particulate compositions.

### Properties of the Foam Composites

A feature of the composites is the plasticisation and physical and/or chemical interaction of the cured phenolic resole resin with the thermoplastic shell of the microspheres and/or with the polystyrene particles. The phenolic resin may solubilise, and/or mix, and/or cross-link with the thermoplastic homopolymer/copolymer of the microspheres and/or polystyrene particles and, as a result, a composite product is formed. When the composite is exposed to a heat source it advantageously maintains its structural integrity.

The solubilisation and/or mixing and/or chemical interaction may account for, at least in part, the low interstitial volume and low water absorption of the foam composites.

Where physical interaction occurs this may be in the form of polymer entanglement which may form an interpenetrating polymer network.

The foam composites are resilient or semi-resilient and non-friable compared to other structural foams. Densities may be produced in the range 10-50 kg/m3, preferably 10-40 kg/m³, more preferably 10-30 kg/m³ depending on formulation and additives. Despite the apparently flammable microsphere and polystyrene content, the foam composites are highly resistant to temperature and fire, likely in part due to the solubilisation and/or mixing and/or chemical interaction of the polymer shell of the microspheres and/or the polystyrene by the phenolic resin. Desirable flame stability is also observed whereas conventional phenolic foams and resin are often subject to spalling/punking.

The advantageous fire resistance is surprising. It is believed that the thermoplastic microspheres and polystyrene particles become thermosetting and therefore char on exposure to heat. This contrasts to thermoplastic resins which melt on heating.

There is also provided a composite block comprising the foam composite as disclosed herein.

There is also provided a panel or a sheet comprising the foam composite as disclosed herein.

The blocks, panels and/or sheets find advantageous use in applications requiring thermal and/or acoustic insulation, for example, in construction.

There is also provided a construction material comprising the blocks, panels and/or sheets as disclosed herein.

Throughout this specification, use of the terms "comprises" or "comprising" or grammatical variations thereon shall be taken to specify the presence of stated features, integers, steps or components but does not preclude the presence or addition of one or more other features, integers, steps, components or groups thereof not specifically mentioned.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited.

### DETAILED DESCRIPTION

It will now be convenient to describe the disclosure with reference to particular embodiments and examples. These embodiments and examples are illustrative only and should not be construed as limiting upon the scope of the disclosure. It will be understood that variations upon the described disclosure as would be apparent to the skilled addressee are within the scope of the disclosure. Similarly, the present disclosure is capable of finding application in areas that are not explicitly recited in this document and the fact that some applications are not specifically described should not be considered as a limitation on the overall applicability of the disclosure.

### Thermoplastic Microspheres

When thermoplastic microspheres are heated, the polymeric shell gradually softens, and the liquid within the shell begins to gasify and expand. When the heat is removed, the shell stiffens and the microsphere remains in its expanded form. When fully expanded, the volume of the microspheres increases more than 40 times. Significant density reductions can be achieved with even a small concentration of, for example, 3% thermoplastic microspheres by weight. The most obvious benefit of the hollow microsphere is the potential to reduce part weight, which is a function of density. Compared to traditional mineral-based additives, such as calcium carbonate, gypsum, mica, silica and talc, hollow microspheres have much lower densities. Typical loadings are 1.5-5% by weight, which can equate to 25% or more by volume.

The expandable thermoplastic microspheres suitable for preparing the compositions and foam composites as disclosed herein may be utilised in various forms. They may be in the form of a slurry dispersed in water or they may be utilised in dry form. Aqueous dispersions are preferred. Suitable microspheres are supplied by AkzoNobel under the trade mark Expancel®.

### Phenolic Resole Resin

A phenolic resole resin suitable for curing, that is, to form a partially cured or substantially completely cured resin as disclosed herein, may be produced by the base-catalysed condensation reaction of a molar excess of an aldehyde, with a substituted or unsubstituted phenol. Preferred substituted phenols are those in which the substituent does not impede the condensation of the phenol(s) with the aldehyde(s). Suitable substituents include halogens or a hydroxy, alkyl or an aryl group. Unsubstituted phenol is most preferred. Suitable aldehydes are formaldehyde (including oligomers/polymers such as trioxane), furfural, sugars and cellulose hydrolysates. A preferred aldehyde is formaldehyde. In one embodiment the molar ratio of aldehyde to phenol is from 1.4 to 1.8:1, for example, about 1.6:1. In a preferred method the temperature at which the phenolic resole resin is prepared should not exceed 65°C, for example no more than 60°C±2°C or no more than 60°C. This limiting temperature of 65°C is preferably maintained while the basic catalyst is active, that is, until the basic catalyst is neutralised. This limiting temperature allows the maximum substitution of the phenol aromatic ring by reactive methylol (-CH₂OH) groups and results in only low molecular weight development in the polymer. Water may then be optionally distilled off to the preferred specification. Due to the resulting low molecular weight (preferably less than 1000 g/mol (Daltons)), the reactive phenolic resole resin is highly soluble in water without phase separation and remains sufficiently reactive to cross-link under dilute aqueous conditions.

Suitable alkaline condensation catalysts are ammonia, ammonium hydroxide, sodium hydroxide, potassium hydroxide and barium hydroxide. Sodium hydroxide is a preferred catalyst.

The phenolic resole resin may be produced from phenol with a molar excess of formaldehyde in the presence of sodium hydroxide as a condensation catalyst.

Conventional phenolic resins are produced by carefully increasing the temperature to 60±2°C and holding there for a period of about 1 hour, after which the temperature is increased to around 80°C for a further period of 2-4 hours. The two stages essentially are:
(1) Ring Substitution at 60°C by formaldehyde into the phenol aromatic ring; and
(2) Condensation Polymerisation at 80°C to increase molecular weight.

In contrast, the present reactive phenolic resole resin may be obtained, for example, by only heating to no more than 65°C, for example, no more than 60±2°C or no more than 60°C for a period of about 5 hours or until an intermediate viscosity of 13.5-14.5 mm^{2·}s⁻¹ (centiStokes) at 25°C is reached for the reaction mixture. This leads to maximum substitution by methylol (-CH₂OH) groups in ortho-, meta- and para- positions of the aromatic ring and only low molecular weight build. The mixture is then neutralised with an acid such as para-toluene sulphonic acid to a pH of less than 7, or 5.5-6.6, or about 6 and most of the process and reaction water may then be distilled off under vacuum down to a level of 2-7%, resulting in a highly reactive material.

### Fillers

The particulate composition and/or the phenolic composites as disclosed herein may comprise one or more fillers. Suitable, non limiting fillers include inorganic compounds, particularly particulate inorganic compounds.

Preferred fillers include elemental metal selected from the group consisting of metals of Groups I, II, III and IV, transition metals or the like of the periodic table, oxides or complex oxides of these metals, salts of these metals, such as fluorides, carbonates, sulfates, silicates, hydroxides, chlorides, sulfites, and phosphates of these metals, and composites of these salts of metals. Preferably used are metal oxides such as amorphous silica, quartz, alumina, titania, zirconia, barium oxide, yttrium oxide, lanthanum oxide, and ytterbium oxide, silica-based complex oxides such as silica-zirconia, silica-titania, silica-titania-barium oxide, and silica-titania-zirconia, glass such as borosilicate glass, glass fibres, aluminosilicate glass, or fluoroaluminosilicate glass, metal fluorides such as barium fluoride, strontium fluoride, yttrium fluoride, lanthanum fluoride, and ytterbium fluoride; inorganic carbonates such as calcium carbonate, magnesium carbonate, strontium carbonate, and barium carbonate; and metal sulfates such as magnesium sulfate and barium sulfate. Other suitable fillers include particulate silica, talc, kaolin, clay, nanocomposites and nanoparticles. Other inorganic compounds such as boric acid may be utilised as a filler.

The filler may be present in amounts of 0.5-60% by weight, or 1-20% by weight, or 2-15% by weight, based on the total weight of the particulate composition.

The filler may have a particle size between 0.1 mm and 5 mm, or between 0.5 mm and 2 mm. The filler may be granular boric acid. Granular boric acids of particle size of about 1 mm are suitable.

### Modified Fillers

Often it is advantageous to treat fillers with a modifiying agent so as to modify the surface properties of the filler. For example fillers may be modified with agents so as to change the fillers solubility properties. Suitable modifiying agents are well known in the art. One preferred class of modifying agents are silanes. One class of silanes are haloalkylsilanes examples of which are 3-chloropropyltrimethoxysilane, 3-chloropropyltriethoxysilane, 3-chloropropyltripropoxysilane, chloropropylmethyldimethoxysilane, chloropropylmethyldiethoxysilane, chloropropyldimethylethoxysilane, chloropropyldimethylmethoxysilane, chloroethyltrimethoxysilane, chloroethyltriethoxy-silane, chloroethylmethyldimethoxysilane, chloroethylmethyldiethoxysilane, chloroethyldimethylmethoxysilane, chloroethyldimethylethoxysilane, chloromethyltriethoxy-silane, chloromethyltrimethoxysilane, chloromethylmethyl-dimethoxysilane, chloromethylmethyldiethoxysilane, chloro-methyldimethylmethoxysilane or chloromethyldimethylethoxysilane. Granular boric acid may be treated with one or more of the above silanes so as to reduce the solubility of the boric acid in water.

### Materials and Process

In an exemplary embodiment a preblend of the following components as described herein may be prepared. After combining the components the preblend may be stored for future use. The specific gravity of the mixture may be in the range 1.4 to 1.7. Continuous slow agitation during the manufacturing process may be utilised.

| **Preblend** | **%.w/w** |
|---|---|
| Expandable thermoplastic microspheres | 9.3% |
| Boric acid | 56.0% |
| Carbon dispersion | 15.6% |
| Surfactant | 0.4% |
| Acidic catalyst | 18.7% |

The preblend may be combined with reactive phenolic resole to form a reactive liquid matrix in the exemplary proportions shown below. This liquid matrix may have a shelf life of between 4 and 10 minutes at about 20°C after which time exothermic cross linking may occur. The rate of cross linking is temperature dependent.

| **Liquid matrix** | **%.w/w** |
|---|---|
| Reactive phenolic resole | 76% |
| Preblend | 24% |

The liquid matrix may be used to coat partially expanded polystyrene particles in the exemplary proportions (and exemplary ranges) shown below.

| **Foam composite** | **%.w/w** |
|---|---|
| Partially expanded polystyrene | 45% (25% to 65%) |
| Liquid Matrix | 55% (35% to 70%) |

### Coating

Coating may be performed in a batch mixer such as a ribbon type mixer. The components may also be blended in a continuous process by preparing the liquid matrix immediately prior to coating partially expanded polystyrene particles.

A stream of partially expanded polystyrene particles may be introduced into, for example, a rotating drum beneath liquid matrix feed streams such that the liquid matrix is drizzled over the surface of the moving partially expanded polystyrene particles. Rotation of the drum may facilitate even distribution of the matrix evenly over the surfaces of the partially expanded polystyrene particles.

The absence of any form of strakes or mixing impellors in the rotating drum may advantageously eliminate the matrix coming into contact with other surfaces, and potential adherence to parts of the mixer.

### Conditioning (B-Staging) to form particulate composition

Conditioning may conveniently be performed in, for example, a rotating drum. Air heated to between, for example, 45°C and 60°C may be passed through the drum and the coating material may progressively lose free water and may initiate cross linking and bond development between the partially expanded polystyrene and the matrix.

During the conditioning process the product characteristic may change from a wet free flowing high viscosity fluid to a sticky plastic, and finally to discrete clumps of lightly adhering mixture.

Coated product exiting the drum may drop on to a mesh conveyor belt or tray. The belt may be fully enclosed in a heated chamber with suitable means of passing air heated to between, for example, 45°C and 60°C over the coated product. The size and speed of the belt or tray may be such that the coated product remains as an undisturbed 100mm thick layer for about 45 mins duration.

Discharge off the belt into a grizzly feeder or combination of granulator and sizing mesh may be required to break down the aggregated material into discrete coated grains ready for conveying into storage prior to composite formation.

### Composite formation

Clamshell style vacuum assisted expanded polystyrene block moulding equipment may be suitable for processing the coated product into blocks. Coated product may be allowed to come to equilibrium in a fully vented storage space where the temperature preferably does not exceed 20°C for between 4hrs and 48hrs from coating. Air transport may be used to convey material to standard block moulder filling guns via a de-dusting station to remove any fines generated during the coated product handling processes.

A standard expandable polystyrene block making cycle may be employed with maximum steam pressure being for example about 2 bar and utilising gentle cross steaming with vacuum assistance. Polishing of mould surfaces may be utilised so as to minimise mechanical keying of the matrix to the mould surface thereby facilitating clean ejection of the finished block.

### Fire Resistance Testing

Fire resistance may be tested in terms of integrity and insulation.

### Integrity

Integrity may be defined as the ability of an element of construction to resist the passage of flames and hot gases from one space to another when tested in accordance with AS1530.4. Failure of integrity criteria is deemed to occur when continuous flaming occurs on the non-exposed side of the test specimen, or when cracks, fissures and other openings through which hot flames and gases can pass through are present.

### Insulation

Insulation may be defined as the ability of an element of construction to maintain a temperature on the surface that is not exposed to a heat source, below the limits specified, when tested in accordance with Australian Standard AS1530.4 (Fire Resistance Test to Building Material). Failure for insulation criteria is deemed to have occurred when the temperature rise of the non exposed side exceeds predetermined thresholds.

Panels prepared from composites according to the present disclosure achieve 30 mins insulation for 100 mm thick panels when tested according to AS1530.4.

### EXAMPLES

The following example utilised the components as set out in Table 1. The weights of the thermoplastic microspheres and the carbon dispersion include water present in the materials.

### Example 1

| **Table 1** | |
|---|---|
| **Material** | **% w/w** |
| Expanded polystyrene (Lambdapor 753p) | 69.7 |
| Phenolic resole resin | 23.2 |
| Thermoplastic microspheres (Expancel® 820 SLU40) | 1.74 |
| Treated boric acid | 3.48 |
| Aqueous carbon dispersion | 0.46 |
| Catalyst (p-toluene sulphonic acid) | 1.39 |

### Preparation of microsphere composition

Particulate boric acid was treated with 3-chloropropyltrimethoxysilane followed by heating the mixture to 70°C for 30mins.

A microsphere composition comprising expandable thermoplastic microspheres, coated boric acid, carbon dispersion and catalyst was prepared by mixing the components in a plough-share mixer for 5 mins. The resultant blend was then sieved through a vacuum assisted Buchner funnel fitted with 1 mm aperture square mesh.

### Preparation of the particulate composition

Polystyrene was expanded to a density of 18kg/m³ and retained in a silo for 11 hrs. The partially expanded polystyrene was fed into a mixing head at a rate of 68 litres/min. The phenolic resole resin was pumped into the mixing head at a rate of 0.68kg/min. The microsphere composition was pumped into the mixing head at a rate of 0.208kg/min.

A multi stream nozzle fed a curtain of phenolic resin and microsphere composition over the moving polystyrene particles at a temperature between 15°C and 30°C.

After approximately 3 minutes the resultant mixture was fed into a second rotating drum with a hot air curtain blowing over the mix. The air temperature was maintained between 50°C and 75°C with a transit time of 10 mins.

The discharge was transferred to a fluid bed and held at 35°C for up to 45 minutes. This material was then fed via air transport to a cloth silo, where it was held for 24 hours.

### Preparation of polystyrene/phenolic composite

The material was then removed from the silo by suction and blown into a block moulder silo and drained down to fill a block mould. Once the mould was filled, a steam cycle was commenced which yielded the completed composite within 10 mins.

### Example 2

### Preparation of microsphere composition

Particulate boric acid was treated with 3-chloropropyltrimethoxysilane followed by heating the mixture to 70°C for 30mins.

A microsphere composition comprising expandable thermoplastic microspheres, coated boric acid, and carbon dispersion was prepared by mixing the components in a plough-share mixer for 5 mins. The resultant blend was then sieved through a vacuum assisted Buchner funnel fitted with 1mm aperture square mesh.

### Preparation of the particulate composition

Polystyrene was expanded to a density of 18kg/m³ and retained in a silo for 11hrs. The partially expanded polystyrene was fed into a mixing head at a rate of 68 litres/min. The phenolic resole resin was pumped into the mixing head at a rate of 0.68kg/min. The microsphere composition was pumped into the mixing head at a rate of 0.167kg/min.

A multi stream nozzle fed a curtain of phenolic resin and microsphere composition over the moving polystyrene particles in a mixer at a temperature between 15°C and 30°C. Catalyst was added to the mixture at the mixer discharge at a rate of 0.0488kg/min.

After approximately 3 minutes the resultant mixture was fed into a second rotating drum with a hot air curtain blowing over the mix. The air temperature was maintained between 50°C and 75°C with a transit time of 10 mins.

The discharge was transferred to a fluid bed and held at 35°C for up to 45 minutes. This material was then fed via air transport to a cloth silo, where it was held for 24 hours.

### Preparation of polystyrene/phenolic composite

The material was then removed from the silo by suction and blown into a block moulder silo and drained down to fill a block mould. Once the mould was filled, a steam cycle was commenced which yielded the completed composite within 10 mins.

In an alternate experiment the material from the silo was used to fill multiple sheet moulds and the moulds were subsequently steamed for 10 mins to produce completed sheets.

### Example 3

### Preparation of microsphere composition

Particulate boric acid was treated with 3-chloropropyltrimethoxysilane followed by heating the mixture to 70°C for 30mins. The material was sieved and the fraction retained on BS#10 mesh (aperture 1.70 mm) discarded.

A microsphere composition comprising expandable thermoplastic microspheres, carbon dispersion and catalyst was prepared by mixing the components in a plough-share mixer for 5 mins.

### Preparation of the particulate composition

Polystyrene was expanded to a density of 18kg/m³ and retained in a silo for 11hrs. The partially expanded polystyrene was fed into a mixing head at a rate of 68 litres/min. The phenolic resole resin was pumped into the mixing head at a rate of 0.68kg/min. The microsphere composition was pumped into the mixing head at a rate of 0.105kg/min. The treated boric acid was fed into the mixing head at a rate of 0.102 kg/min.

A multi stream nozzle fed a curtain of phenolic resin and microsphere composition over the moving polystyrene particles in a mixer at a temperature between 15°C and 30°C.

After approximately 3 minutes the resultant mixture was fed into a second rotating drum with a hot air curtain blowing over the mix. The air temperature was maintained between 50°C and 75°C with a transit time of 10 mins.

The discharge was transferred to a fluid bed and held at 35°C for up to 45 minutes. This material was then fed via air transport to a cloth silo, where it was held for 24 hours.

### Preparation of polystyrene/phenolic composite

The material was then removed from the silo by suction and blown into a block moulder silo and drained down to fill a block mould. Once the mould was filled, a steam cycle was commenced which yielded the completed composite within 10 mins.

In an alternate experiment the material from the silo was used to fill multiple sheet moulds and the moulds were subsequently steamed for 10 mins to produce completed sheets.

### Example 4

### Preparation of microsphere composition

Particulate boric acid was treated with 3-chloropropyltrimethoxysilane followed by heating the mixture to 70°C for 30mins. The material was sieved and the fraction retained on BS#10 mesh (aperture 1.70 mm) discarded.

A microsphere composition comprising expandable thermoplastic microspheres, carbon dispersion and catalyst was prepared by mixing the components in a plough-share mixer for 5 mins.

### Preparation of the particulate composition

Polystyrene was expanded to a density of 18kg/m³ and retained in a silo for 11hrs. The partially expanded polystyrene was fed into a mixing head at a rate of 68 litres/min. The phenolic resole resin was pumped into the mixing head at a rate of 0.68kg/min. The microsphere composition was pumped into the mixing head at a rate of 0.105kg/min. The treated boric acid was fed into the mixing head at a rate of 0.102 kg/min.

A multi stream nozzle fed a curtain of phenolic resin and microsphere composition over the moving polystyrene particles in a mixer at a temperature between 15°C and 30°C.

After approximately 3 minutes the resultant mixture was fed into a second rotating drum with a hot air curtain blowing over the mix. The air temperature was maintained between 50°C and 75°C with a transit time of 10 mins.

The discharge was transferred to a fluid bed and held at 35°C for up to 45 minutes. This material was then fed via air transport to a cloth silo, where it was held for 24 hours.

### Preparation of polystyrene/phenolic composite

The material was then removed from the silo by suction and blown into a continuous tractor type moving belt panel press with our without using facing steel sheets on two faces. The material in the press was steamed as it progressed through the press to form completed sheets or completed insulated panel sith steel, aluminium or other material facings. The continuous press was moving a between 1 and 15 metres/min.

Table 2 indicates the formulations of other composites prepared as Example 1.

| **Table 2** | | | | | | | |
|---|---|---|---|---|---|---|---|
| Run no. | 1 | 2 | 3 | 4 | 5 | 6 | 7 |
| Expanded Polystyrene %(w/w) | 38.7 | 52.5 | 64.8 | 58.4 | 52.3 | 53.5 | 52.6 |
| Phenolic Resin %(w/w) | 47.0 | 36.4 | 27.0 | 31.9 | 35.8 | 36.6 | 36.0 |
| Thermoplastic Microspheres %(w/w) | 3.5 | 2.7 | 2.0 | 2.4 | 3.6 | 1.5 | 2.7 |
| Treated Boric Acid % (w/w) | 7.0 | 5.5 | 4.0 | 4.8 | 5.4 | 5.5 | 5.4 |
| Carbon Dispersion %(w/w) | 0.9 | 0.7 | 0.5 | 0.6 | 0.7 | 0.7 | 0.7 |
| Catalyst % (w/w) | 2.8 | 2.2 | 1.6 | 1.9 | 2.2 | 2.2 | 2.2 |

It was found that all of the composites had excellent physical properties (low interstitial volume and low water absorption) demonstrating advantage over a wide range of relative component amounts. The mechanical properties of the composites were equivalent to expanded polystyrene.

### Fire resistance testing

Test specimens consisted of insulated wall panels comprising foam composites as prepared by the processes disclosed herein. The panels were 3.0 m high, 1.2 m or 0.6 m broad and had a thickness of 50 mm, 100 mm and 250 mm. A comparative test was performed with a 125 mm thick expanded polystyrene panel. Tests were conducted in accordance with AS 1530.4 'Methods for fire tests on building materials, components and structures, Part 4: Fire resistance tests of elements of construction, Section 3 Walls - Vertical Separating Elements'. The results are collected in Table 3.

| **Table 3** | |
|---|---|
| **Material and thickness** | **Insulation failure time (minutes)** |
| Inventive composite 50 mm | 15 |
| Inventive composite 100 mm | 31 |
| Inventive composite 250 mm | 115 |
| Comparative Polystyrene 125 mm | 6 |

It is clear from the results that the composites disclosed herein significantly outperform expanded polystyrene in fire resistance.

Tests were also conducted following ISO 17554. This is a small-scale method for assessing the mass loss rate of essentially flat specimens exposed in the horizontal orientation to controlled levels of radiant heating with an external igniter under well-ventilated conditions. The mass loss rate is determined by measurement of the specimen mass and is derived numerically. Mass loss rate can be used as an indirect measure of heat release rate.

Under the conditions of the test expanded polystyrene had an average specific mass loss rate @ 50kW, over three tests, of 9.81 g/m².s, whereas the composites disclosed herein had an average specific mass loss rate @ 50kW, over three tests, of 1.27 g/m².s. Accordingly, significantly slower combustion was observed with the inventive composites.

## Claims

1. A polystyrene-phenolic foam composite comprising:
(a) expanded polystyrene derived from expandable polystyrene particles containing at least one blowing agent;
(b) cured phenolic resole resin; and
(c) expanded thermoplastic microspheres derived from expandable thermoplastic microspheres containing a propellant encapsulated within a thermoplastic polymer shell,
wherein the composite has a water absorption according to ASTM C272 of less than 5% by volume; and
wherein the composite is obtainable by steam curing.

2. A composite according to claim 1, wherein the cured phenolic resole resin is derived from a reactive resole resin having one or more of the following properties:
(i) a viscosity between 0.5 and 4 Pa.s (500 and 4,000 cP);
(ii) a water content between 2 and 7% by weight;
(iii) a free phenol content less than 25%; or
(iv) a free formaldehyde content of less than 3%.

3. A composite according to claim 1 or 2, wherein the composite comprises from 30 to 70 wt.% of (a), from 20 to 60 wt.% of (b) and from 0.5 to 5 wt.% of (c), based on the total weight of the composite.

4. A composite according to any one of claims 1 to 3, wherein the expanded polystyrene particles are derived from expandable polystyrene particles having an average particle size from between 0.1 and 5 mm.

5. A composite according to any one of claims 1 to 4, wherein the expanded thermoplastic microspheres are derived from expandable thermoplastic microspheres having an average particle size from between 1 and 50 µm (microns), wherein preferably the thermoplastic polymer shell is derived from monomers selected from the group consisting of acrylonitrile, methacrylonitrile, α-chloroacrylonitrile, α-ethoxyacrylonitrile, fumaroacrylonitrile, crotoacrylonitrile, acrylic esters, methacrylic esters, vinyl chloride, vinylidene dichloride, vinyl pyridine, vinyl esters, and derivatives or mixtures thereof.

6. A composite according to any one of claims 1 to 5, further comprising one or more fillers, wherein the fillers preferably are a surface treated filler.

7. Use of a composite block, panel or sheet comprising the foam composite according to any one of claims 1 to 6, in construction.

## Patentansprüche

1. Polystyrol-Phenolischer-Schaum-Verbundstoff, umfassend:
(a) expandiertes Polystyrol, stammend von expandierbaren Polystyrolpartikeln, die mindestens ein Treibmittel enthalten;
(b) gehärtetes phenolisches Resolharz; und
(c) expandierte thermoplastische Mikrokügelchen, stammend von expandierbaren thermoplastischen Mikrokügelchen, die ein Treibgas enthalten, eingeschlossen im Inneren einer thermoplastischen Polymerhülle, wobei der Verbundstoff eine Wasserabsorption gemäß ASTM C272 von weniger als 5 Vol.-% hat; und
wobei der Verbundstoff durch Dampfhärtung erhältlich ist.

2. Verbundstoff gemäß Anspruch 1, wobei das gehärtete phenolische Resolharz von einem reaktiven Resolharz mit einer oder mehreren der folgenden Eigenschaften stammt:
(i) einer Viskosität zwischen 0,5 und 4 Pa.s (500 und 4.000 cP);
(ii) einem Wassergehalt zwischen 2 und 7 Gew.-%;
(iii) einem freien Phenol Gehalt von weniger als 25%; oder
(iv) einem freien Formaldehyd Gehalt von weniger als 3%.

3. Verbundstoff gemäß Anspruch 1 oder 2, wobei der Verbundstoff von 30 bis 70 Gew.-% von (a), von 20 bis 60 Gew.-% von (b) und von 0,5 bis 5 Gew.-% von (c), basierend auf dem Gesamtgewicht des Verbundstoffs, umfasst.

4. Verbundstoff gemäß einem der Ansprüche 1 bis 3, wobei die expandierten Polystyrolpartikel von expandierbaren Polystyrolpartikeln mit einer durchschnittlichen Partikelgröße zwischen von 0,1 und 5 mm stammen.

5. Verbundstoff gemäß einem der Ansprüche 1 bis 4, wobei die expandierten thermoplastischen Mikrokügelchen von expandierbaren thermoplastischen Mikrokügelchen mit einer durchschnittlichen Partikelgröße zwischen 1 und 50 µm (Mikrometer) stammen, wobei vorzugsweise die thermoplastische Polymerhülle von Monomeren stammt, ausgewählt aus der Gruppe bestehend aus Acrylnitril, Methacrylnitril, α-Chloracrylnitril, α-Ethoxyacrylnitril, Fumaroacrylnitril, Crotoacrylnitril, Acrylestern, Methacrylestern, Vinylchlorid, Vinylidendichlorid, Vinylpyridin, Vinylestern, und Derivaten oder Mischungen davon.

6. Verbundstoff gemäß einem der Ansprüche 1 bis 5, ferner umfassend einen oder mehrere Füllstoffe, wobei die Füllstoffe vorzugsweise ein oberflächenbehandelter Füllstoff sind.

7. Verwendung eines/einer Verbundstoffblocks, -tafel oder -platte, umfassend den Schaum-Verbundstoff gemäß einem der Ansprüche 1 bis 6, im Bau.

## Revendications

1. Un composite de mousse polystyrène-phénolique comprenant:
(a) du polystyrène expansé dérivé de particules de polystyrène expansible contenant au moins un agent d'expansion;
(b) une résine résol phénolique durcie; et
(c) des microsphères thermoplastiques expansées dérivées de microsphères thermoplastiques expansibles contenant un agent propulseur encapsulé dans une coquille de polymère thermoplastique,
- lequel composite présente un taux d' absorption d'eau selon ASTM C272 inférieur à 5% en volume; et
- lequel composite peut être obtenu par durcissement à la vapeur.

2. Un composite selon la revendication 1, dans lequel la résine résol phénolique durcie est dérivée d'une résine résol réactive ayant une ou plusieurs des propriétés suivantes:
(i) une viscosité comprise entre 0,5 et 4 Pa.s (500 et 4 000 cP);
(ii) une teneur en eau comprise entre 2 et 7% en poids;
(iii) une teneur en phénol libre inférieure à 25%; ou
(iv) une teneur en formaldéhyde libre inférieure à 3%.

3. Un composite selon la revendication 1 ou 2, dans lequel le composite comprend
de 30 à 70% en poids de (a),
de 20 à 60% en poids de (b) et
de 0,5 à 5% en poids de (c),
exprimés sur la base du poids total du composite.

4. Un composite selon l'une quelconque des revendications 1 à 3, dans lequel les particules de polystyrène expansé sont dérivées de particules de polystyrène expansibles ayant une taille de particules moyenne comprise entre 0,1 et 5 mm.

5. Un composite selon l'une quelconque des revendications 1 à 4, dans lequel les microsphères thermoplastiques expansées sont dérivées de microsphères thermoplastiques expansibles ayant une taille de particules moyenne comprise entre 1 et 50 µm (microns), dans lequel de préférence la coquille de polymère thermoplastique est dérivée de monomères choisis dans le groupe comprenant l'acrylonitrile, le méthacrylonitrile, l'α-chloroacrylonitrile, l'α-éthoxyacrylonitrile, le fumaroacrylonitrile, le crotoacrylonitrile, les esters acryliques, les esters méthacryliques, le chlorure de vinyle, le dichlorure de vinylidène, la vinylpyridine, les esters vinyliques, et les dérivés ou les mélanges de ceux-ci.

6. Un composite selon l'une quelconque des revendications 1 à 5, comprenant en outre une ou plusieurs charges, les charges étant de préférence des charges ayant subi un traitement de surface.

7. Utilisation d'un bloc, d'un panneau ou d'une feuille de composite comprenant le composite de mousse selon l'une quelconque des revendications 1 à 6, dans la construction.
